# EUROPÄISCHE PATENTSCHRIFT

(11) **EP 0 965 480 B1**
(45) Veröffentlichungstag und Bekanntmachung des Hinweises auf die Patenterteilung: **08.09.2004**
(21) Anmeldenummer: 99110802.8
(22) Anmeldetag: 04.06.1999
(51) Int. Cl.: B60N 2/44

(54) **Rücklehnenkonstruktion**
Backrest construction
Construction de dossier de siège

(30) Priorität: 16.06.1998 DE 19826732
(43) Veröffentlichungstag der Anmeldung: 22.12.1999
(73) Patentinhaber: Euromotive Gesellschaft m.b.H., 5282 Ranshofen (AT)
(72) Erfinder: Garnweidner, Peter, 5112 Lamprechtshausen 429a (AT); Danninger, Christian, 5204 Strasswalchen (AT)
(74) Vertreter: Pohlmann, Eckart, Dipl.-Phys.

(56) Entgegenhaltungen:
- EP-A- 0 745 508
- EP-A- 0 776 621
- EP-A- 0 794 878
- WO-A-96/16833
- WO-A-97/46413
- WO-A-98/08705
- DE-A- 19 600 551
- GB-A- 2 305 638
- US-A- 5 029 942
- US-A- 5 685 614
- PATENT ABSTRACTS OF JAPAN vol. 015, no. 443 (M-1178), 12. November 1991 (1991-11-12) & JP 03 189109 A (MAZDA MOTOR CORP), 19. August 1991 (1991-08-19)

## Beschreibung

Die Erfindung betrifft eine Rücklehnenkonstruktion für den Vordersitz eines Kraftfahrzeuges mit einem Lehnenrahmen, einem an der Oberseite des Lehnenrahmens angeordneten Lehnenkopf, einem auf beiden Seiten an der Unterseite des Lehnenrahmens jeweils angeordneten unteren Knoten und einem zwischen den unteren Knoten angeordneten unteren Querträger.

Eine Rücklehnenkonstruktion gemäß dem Oberbegriff des Anspruchs 1 ist aus dem WO 9808705 bekannt.

Auf dem Gebiet des Kraftfahrzeugbaus wird immer stärker eine Leichtbauweise eingeführt, um den Kraftstoffverbrauch so gering wie möglich zu halten. Aufgrund der unterschiedlichen Ausstattungsvarianten von Kraftfahrzeugen, z.B. einer zweitürigen, einer viertürigen Ausführung, einer Ausführung mit elektrischer oder manueller Lehnenneigungsverstellung, einer Ausführung mit elektrischem oder manuellem Kopfstützenantrieb sind zu diesen Bauteilen sehr unterschiedliche Anbindungspunkte erforderlich, die dann, wenn sie alle in der Rücklehnenkonstruktion integriert sind, zu deren Gewicht beitragen, was dem Gedanken der Leichtbauweise entgegensteht.

Um die beim Einsatz von mit hohen Kosten verbundenen Leichtbauwerkstoffen entstehenden Kosten zumindest teilweise zu kompensieren, wird eine automatische Fertigung vorgesehen, um die Kosten des Zusammenbaus zu verringern.

Wenn unterschiedliche Werkstoffe bzw. Legierungen verwandt werden, soll eine einfache Werkstofftrennung für das Recycling gegeben sein, um die Recyclingwerkstoffe weiterverwerten zu können. An der Rücklehnenkonstruktion sollen weiterhin soweit wie möglich Anbaukomponenten von in Großserie gefertigten Stahllehnen verwandt werden, die meist in Blechbauweise ausgebildet sind. Schließlich soll eine möglichst gleiche tragende Konstruktion bei unterschiedlichen Fahrzeugtypen möglich sein, um Entwicklungskosten zu sparen und die Produktionskosten optimieren zu können.

Die der Erfindung zugrundeliegende Aufgabe besteht daher darin, eine Rücklehnenkonstruktion der eingangs genannten Art zu schaffen, die in Leichtbauweise hergestellt werden kann und den obigen Erfordernissen soweit wie möglich genügt.

Diese Aufgabe wird gemäß der Erfindung dadurch gelöst, daß die Bauteile der Rücklehnenkonstruktion teils als Strangpreßprofile und teils als Gußteile ausgeführt sind.

Besonders bevorzugte Weiterbildungen und Ausgestaltungen der erfindungsgemäßen Rücklehnenkonstruktion sind Gegenstand der Patentansprüche 2 bis 7.

Im folgenden wird anhand der zugehörigen Zeichnung ein besonders bevorzugtes Ausführungsbeispiel der Erfindung näher beschrieben.

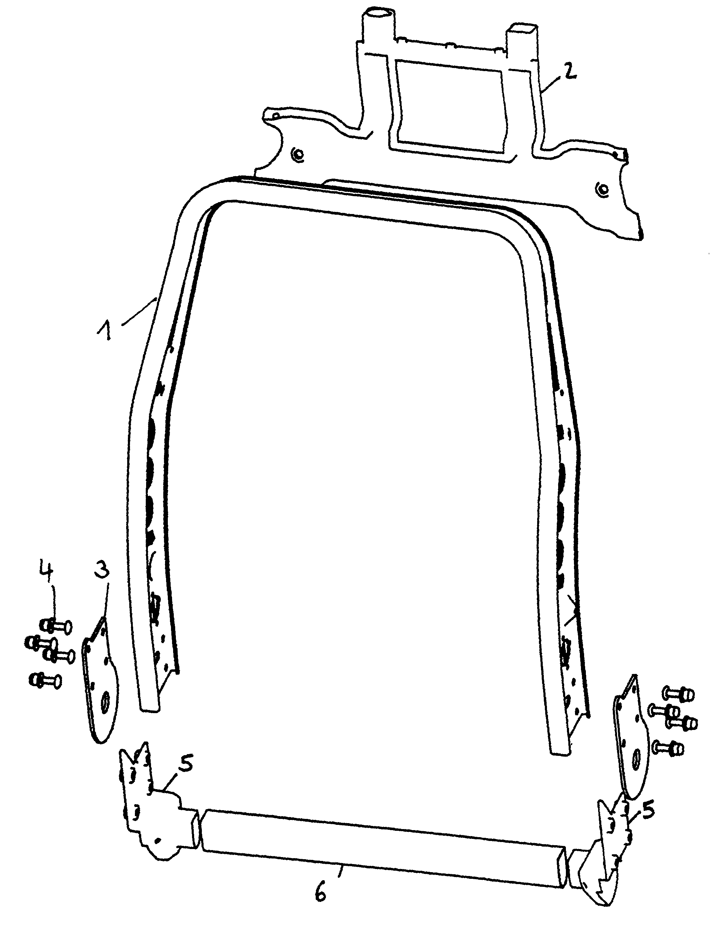

Die einzige Figur zeigt das Ausführungsbeispiel der erfindungsgemäßen Rücklehnenkonstruktion in einer perspektivischen auseinandergezogenen Ansicht.

Die in der Zeichnung dargestellte Rücklehnenkonstruktion für den Vordersitz eines Kraftfahrzeuges umfaßt einen Lehnenrahmen 1, einen Lehnenkopf 2, einen auf beiden Seiten an der Unterseite des Lehnenrahmens 1 angeordneten Knoten 5 sowie einen zwischen den unteren Knoten 5 angeordneten unteren Querträger 6.

Die Bauteile, aus denen die Rücklehnenkonstruktion besteht, lassen sich in zwei Baugruppen, nämlich eine erste Baugruppe aus dem Lehnenrahmen 1 und dem Lehnenkopf 2 sowie eine zweite Baugruppe aus den unteren Knoten 5 und dem Querträger 6 unterteilen.

In der ersten Baugruppe besteht der Lehnenrahmen 1 aus einem Strangpreßprofilteil in Form eines I-Trägers mit variablem Querschnitt.

Am Lehnenrahmen 1, der eine unterschiedliche Bauhöhe haben kann, sind alle Basisbefederungspunkte, Aufnahmepunkte für einen Seitenairbag usw. aufgenommen. Eine weitestgehende Baugleichheit der Anbauteile, die bei Stahllehnen verwendet werden, ist insofern gegeben, als der Steg eines I-Trägers einem Blech gleicht und der Lehnenrahmen aus einem derartigen I-Träger gefertigt ist.

Als Werkstoff für den Lehnenrahmen 1 in Form eines Strangpreßprofilteils kommen Knetwerkstoffe, insbesondere Aluminiumlegierungsknetwerkstoffe mit hoher Dehnung in Frage. Der Einsatz von Knetwerkstoffen mit hoher Dehnung ist in diesem für die Energieabsorbierung bei einem Heckaufprall in erster Linie verantwortlichen Bereich einer Lehne besonders wichtig.

Der Lehnenkopf 2 ist als Leichtbaukomponente ausgebildet und besteht aus einem Al- oder Mg-Druckgußteil oder einem Kunststoffspritzgußteil. Es können aber auch andere kostengünstige Sekundärwerkstoffe eingesetzt werden, da die Belastungen nicht so hoch sind und Dehnungen im plastischen Bereich nicht gefordert sind. In erster Linie ist der Elastizitätsmodul des Werkstoffes für die Bauteilauslegung beim Lehnenkopf 2 von Bedeutung.

Zur Verbindung des Lehnenkopfes 2 mit dem Lehnenrahmen 1 werden gewindefurchende Schrauben verwendet, die in der Zeichnung nicht dargestellt sind. Diese Schrauben sind optimal automatisierbar und ermöglichen eine Kombination unterschiedlichster Werkstoffe sowie deren sortenreine Trennung.

Zur Verbindung des Lehnenkopfes 2 mit dem Lehnenrahmen 1 kommen auch die Verwendung von Nieten, das Durchsetzfügen oder bei Verwendung von Kunststoffteilen das Aufschmelzen von an die Kunststoffteile angespritzten Zylindern in Frage.

Der Lehnenkopf 2 hat grundsätzlich die Aufgabe, die Kopfstützenführungen bzw. -stangen, den Schutz der Kopfstützenstangen, die oberen Basisbefederungspunkte, die Zweitürentriegelung bei Zweitürfahrzeugen, den Elektroantrieb bei elektrischen Kopfstützen, die Befestigungspunkte von Verkleidungsteilen der Lehnenhinterseite und Gepäckschutzbleche aufzunehmen, falls das bei bestimmten Modellen erforderlich ist.

Da die Werkzeugkosten von Formteilen wie Al-, Mg-Druckgußteilen oder Kunststoffspritzgußteilen relativ günstig sind, können in einfacher Weise unterschiedliche Varianten für zweitürige und viertürige Fahrzeuge, für Fahrzeuge mit elektrischer Kopfstütze und manueller Kopfstütze für Fahrzeuge mit Hardtrim hinten oder Sackbezug usw. hergestellt werden.

Da die Werkzeugstandzeit bei solchen Teilen ca. 100.000 Abformungen beträgt, kann das als weitestgehend kostenneutral betrachtet werden.

Die zweite Baugruppe besteht aus den unteren Knoten 5 und dem unteren Querträger 6.

Die Verbindung zwischen den Knoten 5 und dem Querträger 6 besteht beispielsweise aus einer Klebesteckverbindung.

Der untere Querträger 6 ist in Form eines Strangpreßprofils vorzugsweise wiederum aus einem Knetwerkstoff, beispielsweise aus einem Al-Legierungsknetwerkstoff hergestellt. Er ist ein bei einem Aufprall wichtiges Bauteil, das bei einem Seitenaufprall die Überlebensraumsicherung und bei einem Aufprall auf das Heck die Energieabsorption im Beckenbereich sichert.

Für den Normalgebrauch des Sitzes dient der Querträger 6 als Torsionsträger bei asymmetrischer Belastung der Lehne und zur Aufnahme der Basisbefederung unten, die in der Regel aus zwei Löchern besteht. Da er einen stranggepreßten Hohlquerschnitt hat, ist eine optimale Gestaltung sowohl als Torsionsträger als auch als Knickstab gegeben.

Die unteren Gußknoten 5 dienen zur Verbindung des Lehnenrahmens 1 mit dem unteren Querträger 6, als Verstärkung des Anbindungsbereiches des Lehnenneigungsverstellers, als Aufnahme der Basisbefederung, als Führung des Seitenzuges bei einer Zweitürentriegelung sowie als Anschluß für den Elektromotor bei elektrischem Lehnenneigungsversteller. Was die Wirtschaftlichkeit bei unterschiedlichen Varianten anbetrifft, so gelten die gleichen Ausführungen, die in Verbindung mit dem Lehnenkopf 2 gemacht wurden. Wenn bei einem Abguß mehrere Formteile gebildet werden, kann darüber hinaus neben Knotenpaaren für die Ausbildung mit Verstellung von Hand auch wenigstens ein Knotenpaar für die Ausbildung mit elektrischer Verstellung gebildet werden.

Die erste und die zweite Baugruppe sind formschlüssig ineinandergesteckt und mit Verbindungselementen 3, 4, welche zur Anbindung des Lehnenneigungsverstellers sowieso benötigt werden, miteinander verbunden. Die Verbindungselemente 4 sind z.B. Nieten oder Schrauben. Da bei einer derartigen mechanischen Befestigung keine Schweißungen erforderlich sind, wird die sonst auftretende Materialschwächung an den Schweißnähten vermieden.

## Patentansprüche

1. Rücklehnenkonstruktion für den Vordersitz eines Kraftfahrzeuges mit
- einem Lehnenrahmen (1);
- einem an der Oberseite des Lehnenrahmens (1) angeordneten Lehnenkopf (2),
- einem auf beiden Seiten an der Unterseite des Lehnenrahmes (1) jeweils angeordneten unteren Knoten (5) und
- einem zwischen den unteren Knoten (5) angeordneten unteren Querträger (6), **dadurch gekennzeichnet, daß** die Bauteile der Rücklehnenkonstruktion teils als Strangpreßprofile und teils als Gußteile ausgebildet sind.

2. Rücklehnenkonstruktion nach Anspruch 1, **dadurch gekennzeichnet, daß** der Lehnenrahmen (1) und der Querträger (6) als Strangpreßprofile und die Knoten (5) sowie der Lehnenkopf (2) als Gußteile ausgebildet sind.

3. Rücklehnenkonstruktion nach Anspruch 2, **dadurch gekennzeichnet, daß** der Lehnenrahmen (1) aus einem Knetwerkstoff gebildet ist.

4. Rücklehnenkonstruktion nach Anspruch 2 oder 3, **dadurch gekennzeichnet, daß** der Lehnenkopf (2) aus Aluminium oder Magnesium bzw. einer Aluminium- oder Magnesiumlegierung gebildet ist.

5. Rücklehnenkonstruktion nach einem der Ansprüche 2 und 3, **dadurch gekennzeichnet, daß** der Lehnenkopf (2) als Kunststoffspritzgußteil ausgebildet ist.

6. Rücklehnenkonstruktion nach einem der Ansprüche 2 bis 5, **dadurch gekennzeichnet, daß** die Knoten (5) aus Aluminium oder Magnesium bzw. einer Aluminium- oder Magnesiumlegierung gefertigt sind.

7. Rücklehnenkonstruktion nach einem der Ansprüche 2 bis 6, **dadurch gekennzeichnet, daß** der untere Querträger (6) aus einem Knetwerkstoff gefertigt ist.

## Claims

1. Backrest construction for the front seat of a motor vehicle with
a backrest frame (1),
a backrest head piece (2) arranged at the top of the backrest frame (1),
a lower joint piece (5) arranged on each side at the bottom of the backrest frame (1) and
a lower cross member (6) arranged between the lower joint pieces (5),
**characterized in that** the components of the backrest construction are configured partly as extruded profiles and partly as mouldings.

2. Backrest construction according to Claim 1, **characterized in that** the backrest frame (1) and the cross member (6) are configured as extruded profiles, and the joint pieces (5) and backrest head piece (2), as mouldings.

3. Backrest construction according to Claim 2, **characterized in that** the backrest frame (1) is made of a wrought material.

4. Backrest construction according to Claim 2 or Claim 3, **characterized in that** the backrest head piece (2) is made of aluminium or magnesium, or an aluminium or magnesium alloy.

5. Backrest construction according to Claim 2 or Claim 3, **characterized in that** the backrest head piece (2) is configured as a plastic injection moulding.

6. Backrest construction according to any one of Claims 2 to 5, **characterized in that** the joint pieces (5) are fabricated from aluminium or magnesium, or an aluminium or magnesium alloy.

7. Backrest construction according to any one of Claims 2 to 6, **characterized in that** the lower cross member (6) is fabricated from a wrought material.

## Revendications

1. Construction de dossier, pour le siège avant d'un véhicule automobile, comprenant :
- un cadre de dossier (1) ;
- une tête de dossier (2), disposée en face supérieure du cadre de dossier (1) ;
- un noeud inférieur (5), disposé sur chacun des deux côtés, en face inférieure du cadre de dossier (1), et
- une traverse inférieure (6), disposée entre les noeuds inférieurs (5), **caractérisée en ce que** les composants de la construction de dossier sont réalisés partiellement sous forme de profilés extrudés et partiellement sous forme de pièces moulées.

2. Construction de dossier selon la revendication 1, **caractérisée en ce que** le cadre de dossier (1) et la traverse (6) sont réalisés sous la forme de profilés extrudés et les noeuds (5), ainsi que la tête de dossier (2), sont réalisés sous la forme de pièces moulées.

3. Construction de dossier selon la revendication 2, **caractérisée en ce que** le cadre de dossier (1) est formé en un matériau ayant subi une transformation plastique.

4. Construction de dossier selon la revendication 2 ou 3, **caractérisée en ce que** la tête de dossier (2) est formée en aluminium ou en magnésium, respectivement en un alliage d'aluminium ou de magnésium.

5. Construction de dossier selon l'une des revendications 2 et 3, **caractérisée en ce que** la tête de dossier (2) est réalisée sous la forme d'une pièce moulée par injection, en matière synthétique.

6. Construction de dossier selon l'une des revendications 2 à 5, **caractérisée en ce que** les noeuds (5) sont fabriqués en aluminium ou en magnésium ou en un alliage d'aluminium ou de magnésium.

7. Construction de dossier selon l'une des revendications 2 à 6, **caractérisée en ce que** la traverse inférieure (6) est fabriquée en un matériau ayant subi une transformation plastique.
